# EUROPEAN PATENT APPLICATION

(11) **EP 2 479 962 A1**
(43) Date of publication of application: **25.07.2012**
(21) Application number: 10824464.1
(22) Date of filing: 20.10.2010
(51) Int. Cl.: H04M 1/725

(54) **METHOD AND MOBILE TERMINAL FOR RECYCLING SHORT MESSAGES**

(30) Priority: 23.10.2009 CN 200910207111
(71) Applicant: ZTE Corporation, Shenzhen, Guangdong 518057 (CN)
(72) Inventor: LIANG, Hao, Guangdong 518057 (CN); HUANG, Lei, Guangdong 518057 (CN)
(74) Representative: Johnson, Richard Alan
(86) International application number: PCT/CN2010/077917
(87) International publication number: WO 2011/047623

(57) **Abstract**

The present invention provides a method and terminal for recycling the short messages, and the method includes: a mobile terminal storing the information of keywords of short message content configured by a user; when monitoring an operation of the user deleting the short messages, the mobile terminal analyzing whether the content of the short messages to be deleted contains the keywords, if yes, copying the short messages to be deleted to a recycle box. The present invention makes the user conveniently get back the short messages containing the important information which are lost due to a mistaken deletion, and it can effectively save the storage space of the mobile terminal and reduce the possibility of leaking the important information of the user.

## Description

### Technical Field

The present invention relates to communication field, and particularly, to a method and mobile terminal for recycling short messages.

### Background of the Related Art

In the modern society, the tempo of the life is getting faster and faster, and a mobile terminal has become an essential communication tool for people. In some cases, due to the operation of the user mistakenly deleting or emptying a box (which can include an inbox, sentbox and draftbox and so on), it may cause the record of the short messages containing the important information (such as phone number, E-mail address and bank account number and so on) to be lost, and thus, the user will hope to get back the short messages containing the important information at the moment.

### Summary of the Invention

The present invention provides a method and mobile terminal for recycling short messages, to perform filtering and recycling on the short messages when a user deletes the short messages according to keywords configured by the user, thereby making the user conveniently get back the short messages containing important information which are lost due to a mistaken deletion.

The present invention provides a method for recycling short messages, which comprises:
a mobile terminal storing information of keywords of short message content configured by a user; and
   when monitoring an operation of the user deleting short messages, the mobile terminal analyzing whether content of short messages to be deleted contains the keywords, if yes, copying the short messages to be deleted to a recycle box.

The method can further comprise: the mobile terminal storing information of a password for accessing the recycle box configured by the user.

The method can further comprise: after the mobile terminal receives a request of the user for accessing the recycle box, verifying whether a password input by the user is identical with the password for accessing the recycle box, if yes, entering the recycle box.

The method can further comprise: if receiving information input by the user for recovering a specific short message in a state of recycle box interface, the mobile terminal copying the specific short message to a specific box.

The keywords can be phone number, E-mail address or bank account number.

The present invention further provides a mobile terminal, which comprises:
a configuring module, which is configured to store information of keywords of short message content configured by a user;
a monitoring module, which is configured to monitor whether the user performs an operation of deleting short messages, if yes, output a signal to an analyzing module;
the analyzing module, which is configured to, after receiving the signal output by the monitoring module, analyze whether content of short messages to be deleted contains the keywords, if yes, send information of the short messages containing the keywords to a data processing module; and
the data processing module, which is configured to, after receiving the information of the short messages containing the keywords, copy the short messages to be deleted to a recycle box.

The configuring module can be further configured to store information of a password for accessing the recycle box configured by the user. The data processing module can be further configured to, after receiving a request of the user for accessing the recycle box, verify whether a password input by the user is identical with the password for accessing the recycle box, if yes, enter the recycle box.

The data processing module can be further configured to, after receiving information input by the user for recovering a specific short message, copy the specific short message from the recycle box to a specific box.

The keywords can be phone number, E-mail address or bank account number.

The method and mobile terminal provided by the present invention for recycling short messages have the following beneficial effects:
1) Compared with the existing technology, what the present invention provides is a mobile terminal which performs filtering and deleting according to the set keywords and does not need the special support of any network side, thereby reducing the difficulty and cost of development;
2) The present invention performs filtering and recycling on the short messages when the user deletes the short messages according to the keywords configured by the user, thereby making the user conveniently get back the short messages containing the important information which are lost due to a mistaken deletion;
3) The present invention performs the control on the filtering keywords during deletion, and it does not recycle all the deleted short messages, which effectively saves the storage space of the mobile terminal.
4) The present invention performs a user identity authentication process for accessing the recycle box, and the recycle box will be entered to perform the operations of checking and restoring only after the authentication is passed, which reduces the possibility of leaking the important information of user effectively.

### Brief Description of Drawings

FIG. 1 is a schematic diagram of the mobile terminal according to the example of the present invention.
FIG. 2 is a flow diagram of the method for recycling short messages according to the example of the present invention.
FIG. 3 is a flow diagram of the operation for recovering the short messages in the recycle box according to the example of the present invention.

### Preferred Embodiments of the Present Invention

In some cases, the user hopes that the mobile terminal can recover the deleted short messages. However, the mobile phone has a limited space and not all the short messages are necessary to be recovered, thus the main idea of the present invention is that: the user can configure the keywords (such as phone number, E-mail address and bank account number and so on) of the short messages allowed to be recovered, that is, if the keywords are contained in the short messages, the short messages are transferred to the recycle box when being deleted, thereby making the user recover the short messages. In addition, since all the short messages transferred to the recycle box contain the important information, it is necessary for the mobile terminal to perform the password authentication for accessing the recycle box, so as to prevent leaking the important information and bring great loss to the user.

The present invention will be further described in detail in combination with the accompanying drawings and specific examples below.

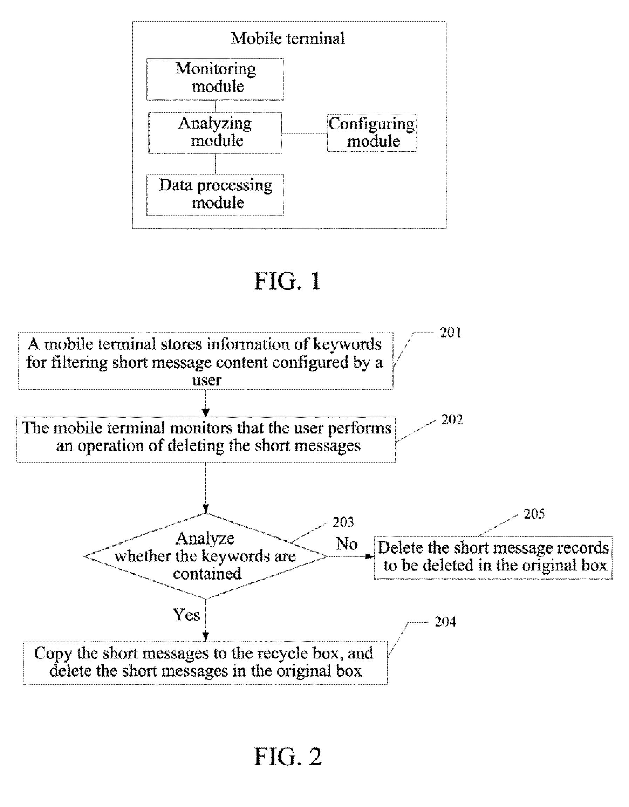

FIG. 1 is a schematic diagram of the mobile terminal according to the example of the present invention, and as shown in FIG. 1, the mobile terminal of the example comprises:
a configuring module, which is configured to: store information of keywords of short message content configured by a user, and it can be further configured to: store information of a password for accessing the recycle box configured by the user. The keywords of the short message content can be phone number, E-mail address or bank account number and so on, and they certainly also can be other contents configured by the user according to requirements;
a monitoring module, which is configured to: monitor whether the user performs an operation of deleting the short messages, if yes, output a signal to an analyzing module;
the analyzing module, which is configured to: after receiving the signal, analyze whether the content of short messages to be deleted contains the keywords stored by the configuring module, and if yes, send the information of the short messages containing the keywords to a data processing module, if no, send information of the short messages not containing the keywords to the data processing module; and
the data processing module, which is configured to: copy the short messages to a recycle box after receiving the information of the short messages containing the keywords, and then delete the short messages in the original box (such as an inbox, sentbox or draftbox and so on); if the information of the short messages not containing the keywords is received, delete the short messages directly; and transfer a specific short message from the recycle box to a specific box (e.g. the inbox) after receiving the information input by the user for recovering the specific short message.

If the user accesses the recycle box, it is required to perform user identity authentication, and it is allowed to enter the recycle box to check and perform operations of deleting and restoring the short messages only after the authentication is passed, so as to reduce the possibility of leaking the important information of the user effectively.

Therefore, the data processing module according to the example is also used to, after receiving the information of the user accessing the recycle box, verify whether the password information input by the user is identical with the access password in the configuring module, and if yes, enter the recycle box, if no, prompt the information such as an authentication failure, and the operation ends.

The mobile terminal according to the example can perform filtering and recycling on the short messages when the user deletes the short messages according to the keywords configured by the user, thereby making the user conveniently get back the short messages containing important information which are lost due to a mistaken deletion; it performs the control on the filtering keywords during deletion and does not recycle all the deleted short messages, which effectively saves the storage space of the mobile terminal; it also can perform a user identity authentication process for accessing the recycle box, and entering the recycle box is allowed to perform the operations of checking and restoring only after the authentication is passed, which effectively reduces the possibility of leaking the important information of the user; and it does not need special support of any network side, thereby reducing the difficulty and cost of development.

FIG. 2 is a flow diagram of the method for recycling short messages according to the example of the present invention, and as shown in FIG. 2, the method for recycling short messages according to the example comprises the following steps.

In step 201, the mobile terminal stores information of keywords of short message content configured by a user, and it can configure the information of an access password of the recycle box;
the keywords for filtering short message content can be phone number, E-mail address or bank account number and so on, and they certainly can be other contents configured by the user as the keywords according to requirements.

In step 202, the mobile terminal monitors whether the user performs an operation of deleting the short messages;
if the user of the mobile terminal executes the action of deleting the short messages, such as deleting a certain short message in an outbox, the mobile terminal will monitor a request for deleting the short messages.

In step 203, the short message content to be deleted is filtered to determine whether the keywords are contained;
the mobile terminal monitors and obtains a request for deleting short messages and then filters the content of the short messages, and checks whether the pre-configured keywords are contained in the content of the short messages, if yes (if the user configures a plurality of keywords, it is OK that only one of keywords is contained in the content of short message), proceed to step 204, if no, proceed to step 205.

In step 204, the short messages are copied to the recycle box, and the short messages in the original box (such as an inbox, sentbox or draftbox and so on) are deleted.

In step 205, the short messages to be deleted in the original box are deleted.

The method for recycling the short messages according to the example can perform filtering and recycling on the short messages when the user deletes the short messages according to the keywords configured by the user, thereby making the user conveniently get back the short messages containing the important information which are lost due to a mistaken deletion; and it can perform the control on the filtering keywords during deletion and does not recycle all the deleted short messages, which effectively saves the storage space of the mobile terminal.

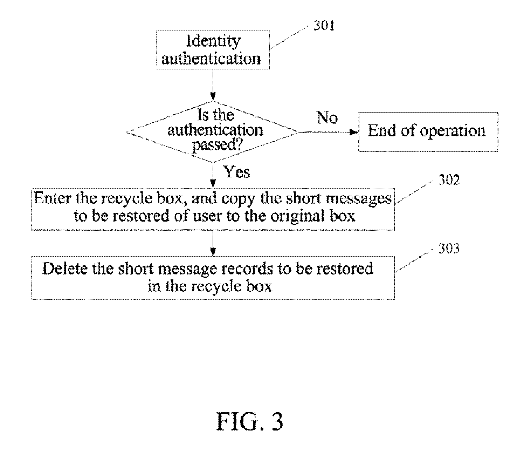

FIG. 3 is a flow diagram of the operation for recovering the short messages in the recycle box according to the example of the present invention, as described in FIG. 3, the specific flow for recovering the short messages in the recycle box according to the example comprises the following steps.

In step 301, after receiving the information of the user accessing the recycle box, the mobile terminal enters the recycle box, and if the user configures an access password for the recycle box in advance, the mobile terminal performs an identity authentication according to the password input by the user and the access password configured by the user, if the authentication is passed, proceed to step 302; if no, an authentication failure is prompted, and the flow ends.

In step 302, the recycle box is entered, and the short messages to be restored of the user are copied to a specific box (e.g. an inbox), and the short messages to be restored also can be copied to the box in which the short messages are located before being deleted.

In step 303, the short message records to be restored in the recycle box are deleted.

The method for recycling the short messages according to the example can perform the user identity authentication process for accessing the recycle box, and the recycle box can be entered to perform operations of checking and restoring only after the authentication is passed, which effectively reduces the possibility of leaking the important information of the user.

The above description is only the preferred examples of the present invention, which is not used to limit the present invention. All the modifications, equivalent substitutions, and improvements and so on made within the spirit and principle of the present invention shall fall into the protection scope of the present invention.

### Industrial Applicability

Compared with the existing technology, the present invention makes the user conveniently get back the short messages containing the important information which are lost due to a mistaken deletion, and it can effectively save the storage space of the mobile terminal and reduce the possibility of leaking the important information of the user.

## Claims

1. A method for recycling short messages, comprising:
a mobile terminal storing information of keywords of short message content configured by a user; and
when monitoring an operation of the user deleting short messages, the mobile terminal analyzing whether content of short messages to be deleted contains the keywords, if yes, copying the short messages to be deleted to a recycle box.

2. The method according to claim 1, further comprising: the mobile terminal storing information of a password for accessing the recycle box configured by the user.

3. The method according to claim 2, further comprising: after the mobile terminal receives a request of the user for accessing the recycle box, verifying whether a password input by the user is identical with the password for accessing the recycle box, if yes, entering the recycle box.

4. The method according to claim 1, further comprising: if receiving information input by the user for recovering a specific short message in a state of recycle box interface, the mobile terminal copying the specific short message to a specific box.

5. The method according to any one of claims 1 to 4, wherein the keywords are phone number, E-mail address or bank account number.

6. A mobile terminal, comprising:
a configuring module, configured to store information of keywords of short message content configured by a user;
a monitoring module, configured to monitor whether the user performs an operation of deleting short messages, if yes, output a signal to an analyzing module;
the analyzing module, configured to analyze whether content of short messages to be deleted contains the keywords after receiving the signal output by the monitoring module, and if yes, send information of the short messages containing the keywords to a data processing module; and
the data processing module, configured to copy the short messages to be deleted to a recycle box after receiving the information of the short messages containing the keywords.

7. The mobile terminal according to claim 6, wherein the configuring module is further configured to store information of a password for accessing the recycle box configured by the user.

8. The mobile terminal according to claim 7, wherein,
the data processing module is further configured to, after receiving a request of the user for accessing the recycle box, verify whether a password input by the user is identical with the password for accessing the recycle box, if yes, enter the recycle box.

9. The mobile terminal according to claim 6, wherein,
the data processing module is further configured to, after receiving information input by the user for recovering a specific short message, copy the specific short message from the recycle box to a specific box.

10. The mobile terminal according to any one of claims 6 to 9, wherein the keywords are phone number, E-mail address or bank account number.
